# EUROPEAN PATENT APPLICATION

(11) **EP 2 642 006 A1**
(43) Date of publication of application: **25.09.2013**
(21) Application number: 11841921.7
(22) Date of filing: 14.11.2011
(51) Int. Cl.: D04B 21/20, B32B 5/26, B64C 1/00, D04B 21/00

(54) **STRUCTURAL WARP KNIT SHEET AND LAMINATE THEREOF**

(30) Priority: 16.11.2010 JP 2010255547
(71) Applicant: Toray Industries, Inc., Tokyo 103-8666 (JP)
(72) Inventor: HORIBE, Ikuo, Aichi 4558502 (JP); WADAHARA, Eisuke, Aichi 4558502 (JP); YAMANOUCHI, Masahiro, Aichi 4558502 (JP); SHINODA, Tomoyuki, Aichi 4558502 (JP)
(74) Representative: Hoefer & Partner
(86) International application number: PCT/JP2011/076166
(87) International publication number: WO 2012/067063

(57) **Abstract**

The invention relates to a warp knit sheet which has excellent conformability to shapes having a curved surface and has excellent mechanical properties, which can form a thick-wall part, which can accommodate a molding method having excellent suitability for mass production, and which is for use in spars or stringers each having a curved surface. The invention further relates to a laminate of the warp knit sheets. The structural warp knit sheet is a warp knit sheet for spars or stringers which comprises: a warp knit structure constituted of chain-stitch structures configured of ground knitting yams; longitudinal insertion yarns that have been inserted in the longitudinal direction into the warp knit structure, the longitudinal insertion yarns being continuous carbon fiber yams; and transverse insertion yarns that have been inserted in directions along which the transverse insertion yarns shuttle between the adjacent chain-stitch structures, the chain-stitch structures having been united by means of the transverse insertion yarns. The longitudinal insertion yarns are carbon fiber yarns which each is composed of 12,000 - 50,000 filaments and has a tensile strength of 4 GPa or higher, a tensile modulus of 220 - 450 GPa, and a drape value of 4 - 22. The structural warp knit sheet has been configured so that the longitudinal insertion yarns in the warp knit sheet each can be moved independently of the adjacent yarns and can be arranged along the shape of a curved surface.

## Description

### Technical Field

The invention relates to a warp knit sheet and a laminate thereof advantageously used for beams for supporting structural bodies, particularly spars (wing beams) and stringers that support wing structures. The invention further relates to a warp knit sheet and a laminate thereof advantageously used for curved spars (wing beams and stringers, such as those forming part of main wings and tail units of aircraft, helicopter blades and windmill blades.

### Background Art

In recent years, structure-mounted wing structures (wings and blades) have been subject to strong demands for upsizing and weight reduction. For example, in the civilian aircraft application, a move towards main wings made of composite materials aimed at improving fuel efficiency has been underway, while wind power blades have been undergoing a shift towards high design outputs based on upsizing. In response to such demands, the use of carbon fibers has been expanding, particularly in spars and stringers, where demands for weight reduction are strong (e.g., patent literatures 1 and 2).

Furthermore, amid demands for greater functionality, wing structures (wings and blades) are increasingly more frequently molded into curved shapes, making it essential for parts to accommodate curvatures. In concrete terms, with main wings and tail units of aircraft, helicopter blades, windmill blades, and the like, there are demands for curved shapes, such as arches and twists, geared towards improving aerodynamic characteristics (including improvements in fuel efficiency, rotational efficiency, and quietness). For example, in the area of windmill blades, curved designs aimed at improving aerodynamic performance are being pursued and empirically tested (e.g., non-patent literature 1).

However, the use of carbon fiber prepregs or general-purpose carbon fiber fabrics (e.g., patent literature 3) for the purpose of obtaining curved spars has a problem in that it is difficult to arrange carbon fiber yarns along the shape of a curved plane without creating creases due to the inability of carbon fiber yarns to move in or perpendicular to the direction of their fiber axis independent of adjacent yarns. This becomes pronounced when the radius of curvature of a curved section is 10 m or less. Any attempt to forcibly apply a carbon fiber prepreg or general-purpose carbon fiber fabric to a curved plane ends in the formation of creases due to the slacking of the carbon fiber yarns present along the inside curvature caused by the difference between the arc lengths of the inside and outside curvatures, which is attributable to the low ability of carbon fiber yarns to expand and contract. This gives rise to problems in terms of an inability to mold a composite into a desired shape and a dramatic reduction in mechanical properties due to internal creases as flaws. In such cases, desired characteristics cannot be easily obtained, leading to a large increase in weight, so much so that the use of carbon fiber loses much of its significance.

Under these circumstances, curved spars have been molded using the hand lay-up method, whereby they are, in reality, manufactured either by manually arranging carbon fiber yarns bit by bit so as to eliminate the difference in curvature arc length or arranging carbon fiber yarns as discontinuous fiber through the introduction of incisions where creases form.

Such problems apply equally to aircraft wing structures, and the manufacture of flawless molded products that conform to the complex shapes of spars and stringers have been very time consuming.

In addition, a spar or stringer in a wing structure is required to bear large loads, and from this viewpoint, there is a need to secure large wall thicknesses by forming parts from laminates of, in the case of the thickest part for example, 50 to 300 plies of base material. However, when conventional general-purpose fabrics are used as base material, it has been difficult to form such thick-wall structures using a molding method with excellent suitability for mass production (e.g., resin infusion molding).

Namely, the industrial-scale manufacturing of curved spars and stringers faces a major problem in that it has not been possible to apply a molding method conducive to high manufacturing efficiency and composite product quality with excellent suitability for mass production.

Meanwhile, the carbon fiber sheet method is known as a typical engineering method to repair/reinforce concrete structures, such as bridge piers. It repairs/reinforces concrete structures using composite material known as a carbon fiber-reinforced plastic, produced on site by impregnating carbon fiber sheets with a resin and curing them. As such carbon fiber sheets, it has been proposed to use warp knit sheets manufactured by longitudinally inserting reinforcing fiber yarns into longitudinally structured warp knit fabrics at prescribed intervals (e.g., patent literatures 4 to 9).

However, patent literatures 4 to 9 and other conventional techniques are designed to apply hand lay-up molding, and have not been verified in terms of, for example, the feasibility of fabricating preforms from multiple sheets laminated together, particularly 50 or more of them, and the applicability of laminates comprising large numbers of sheets to curved structures. In reality, no consideration has been made about the achievement of a curved preform shape from a laminate comprising a large number of carbon fiber sheets and application of molding methods conducive to high manufacturing efficiency and composite product quality.

For this reason, hope are high for the arrival of a carbon fiber sheet for spars and stringers in wing structures (wings and blades) that exhibits excellent conformability to shapes, especially when shaped into curved preforms, accommodates a molding method that is conducive to high composite product quality and having excellent suitability for mass production, and is able to meet mechanical properties required of it as a composite material, as well as a manufacturing technique therefor.

### Citation List

### Patent Literature

Patent Literature 1: WO 03/093672 A1
Patent Literature 2: US 7,427,189
Patent Literature 3: JP 10-331047 A
Patent Literature 4: JP 06-101143 A
Patent Literature 5: JP 10-037051 A
Patent Literature 6: JP 2004-360106 A
Patent Literature 7: JP 2006-124945 A
Patent Literature 8: JP 2010-024554 A
Patent Literature 9: JP 2010-043400 A

### Non Patent Literature

Non Patent Literature 1: EWEC-2007 (European Wind Energy Conference 2007), presentation material titled "Sweep Twist Adaptive Blade", Joshua Paquette, May 7, 2007

### Summary of the Invention

### Technical Problem

The invention aims to, by solving the problems described above, provide warp knit sheets and laminates thereof for use in curved spars and stringers that not only have excellent conformability to curved shapes as carbon fiber sheets and excellent mechanical properties of composites, as a result of minimizing creasing, but also are capable of forming thick-wall parts and accommodating molding methods that have excellent suitability for mass production.

### Solution to the Problem

To achieve the above objective, the invention adopts the following configurations:
(1) A structural warp knit sheet to serve as a warp knit sheet for spars and stringers, comprising a warp knit structure constituted of chain-stitch structures of ground knitting yarns, continuous carbon fiber yarns inserted into the warp knit structure in the longitudinal direction as longitudinal insertion yarns, and transverse insertion yarns inserted in directions along which they shuttle between the adjacent chain-stitch structures to unite the chain-stitch structures, the longitudinal insertion yarns being carbon fiber yarns each including 12,000 - 50,000 filaments and having a tensile strength of 4 GPa or higher, a tensile modulus of 220 - 450 GPa, and a drape value of 4 - 22, and the longitudinal insertion yarns each being able to move independently of the adjacent yarns and able to be arranged along the shape of a curved plane.
(2) The structural warp knit sheet as described in item (1), wherein the carbon fiber yarns have a maximum movable distance of 0.5 to 10 mm and wherein, when the structural warp knit sheet is placed over a hemisphere having a radius of 0.1m, the carbon fiber yarns can be arranged along the shape of the curved plane of the hemisphere.
(3) The structural warp knit sheet as described in either item (1) or (2), wherein at least either of the ground knitting yarns and the transverse insertion yarns are crimped yarns or covering yarns.
(4) A warp knit sheet laminate comprising structural warp knit sheets as described in any of items (1) to (3), their number being 50 to 300 in the thickest part, the structural warp knit sheets being partially bonded or stitched together, the carbon fiber yarns being arranged along the shape of a curved plane having a minimum radius of curvature of 0.1 to 10 m in its curved part, and at least 50 weight % of the structural warp knit sheets in the warp knit sheet laminate are arranged so that the lengthwise direction of the warp knit sheet laminate and the fiber-axis direction of the longitudinal insertion yarns substantially coincide.
(5) The warp knit sheet laminate as described in item (4), wherein the laminated structural warp knit sheets have a binder at least on their surfaces and the partial bonding between laminated structural warp knit sheets is achieved by the binder.

### Advantageous Effect of the Invention

A warp knit sheet for spars and stringers as disclosed in the invention comprises a warp knit structure constituted of chain-stitch structures based on ground knitting yarns, continuous carbon fiber yarns inserted into the warp knit structure in the longitudinal direction as longitudinal insertion yarns, and transverse insertion yarns inserted in directions along which they shuttle between the adjacent chain-stitch structures to unite the chain-stitch structures, while its longitudinal insertion yarns are carbon fiber yarns each of which is composed of 12,000 - 50,000 filaments and has a tensile strength of 4 GPa or higher, a tensile modulus of 220 - 450 GPa, and a drape value of 4 - 22. In addition, the warp knit sheet has been configured so that the longitudinal insertion yarns can each move independently of the adjacent yarns. For this reason, the warp knit sheet can be easily made to conform to curved shapes. For example, when a warp knit sheet of the invention is placed over a hemisphere having a radius of 0.1m, it deforms to the shape of the curved surface without creating creases or causing unevenness to the interval of longitudinal insertion yarns, with carbon fiber yarns arranged uniformly.

In addition, on basis of the above warp knit sheet, by simultaneously deforming a prescribed number of sheets to a curved shape and laminating them and further stacking two or more such laminates together, a curved laminate containing a maximum of 50 to 300 sheets, as well as a composite having excellent mechanical properties, can be obtained. For this reason, it is possible to obtain composites that are well suited for spars and stringers, particularly spar caps. In this case, it is also possible to attach binders to the above warp knit sheets, at least onto their surfaces, beforehand to partially bond a prescribed number of them together after laminating them. Alternatively, it is possible to, after laminating a prescribed number of those warp knit sheets together, stitch them together. Such bonding or stitching makes it possible to form thick-wall parts, while accommodating resin infusion molding, resin transfer molding and other molding methods conducive to high manufacturing efficiency and composite product quality with excellent suitability for mass production.

### Brief Description of the Drawings

Fig. 1 is a schematic plan view of an embodiment of the warp knit sheet of the invention.
Fig. 2-1 is an exemplary diagram showing a pretreatment for the measurement of the drapability of carbon fiber yarns.
Fig. 2-2 is a schematic exemplary diagram of the measurement apparatus for the drapability of carbon fiber yarns.
Fig. 3 is a schematic perspective view of a hemispherical mandrel to evaluate the curved plane conformability of a warp knit sheet.
Fig. 4 is a schematic perspective view of an embodiment of the laminate for a spar of the invention.
Fig. 5 is a schematic perspective view of another embodiment of the laminate for a spar of the invention.
Fig. 6 is a schematic plan view of the laminate for a spar illustrated in Fig. 4.
Fig. 7 is a schematic plan view of the laminate for a spar illustrated in Fig. 5.

### Description of Embodiments

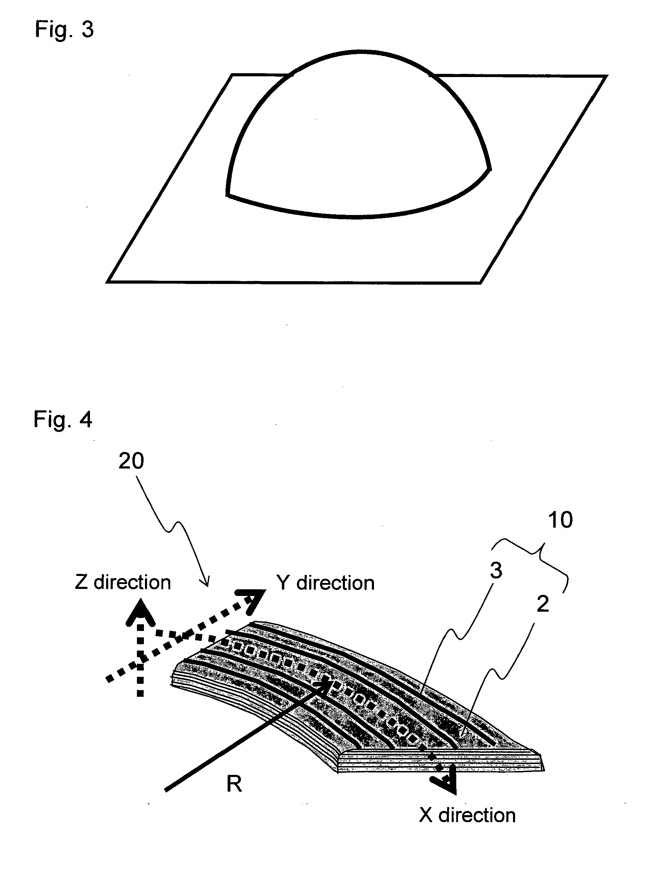

A structural warp knit sheet (hereafter may also be referred to as a "warp knit sheet") of the invention features a warp knit structure constituted of chain-stitch structures based on ground knitting yarns, continuous carbon fiber yarns inserted into the warp knit structure in the longitudinal direction as longitudinal insertion yarns, and transverse insertion yarns inserted in directions along which the transverse insertion yarns shuttle between the adjacent chain-stitch structures to unite the chain-stitch structures. The warp knit sheet has been configured so that the carbon fiber yarns can each move independently of the adjacent yarns and can be arranged along the shape of a curved plane without allowing the sheet to form creases. In this regard, the shape of a curved plane refers to a shape which would deform a warp knit sheet into an arch in a given plane (the X-Y, X-Z or Y-Z plane), for example as illustrated in Fig. 4, or twist it in three-dimensional space (X-Y-Z), i.e. a shape that would cause a sheet of paper to crease during an attempt to put the paper into it by bending without folding.

Preferred embodiments of the warp knit sheet of the invention are described below using drawings.

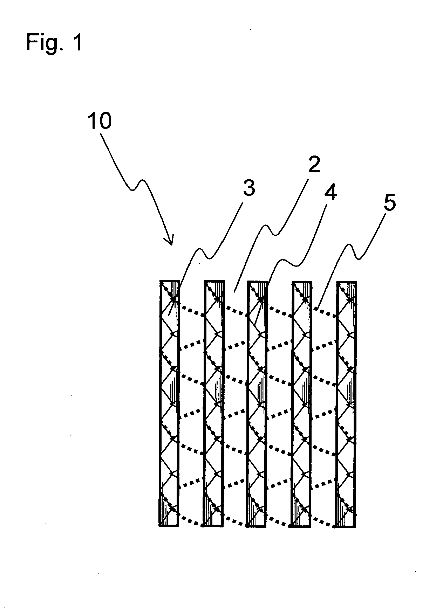

Fig. 1 is a schematic plan view of an embodiment of the warp knit sheet of the invention.

In a warp knit sheet 10 illustrated in Fig. 1, both longitudinal insertion yarns 3, composed of carbon fiber yarns and placed in longitudinal direction (also referred to as lengthwise direction or fiber direction), and ground knitting yarns 4, warp-knit in the same direction as the longitudinal insertion yarns to form warp knit structures in such a manner as to embrace and bind longitudinal insertion yarns, are united by transverse insertion yarns 5, which shuttle between the adjacent warp knit structures. This creates a gap 2 between adjacent longitudinal insertion yarns 3. In this configuration, the carbon fiber yarns are embraced and bound by warp knit structures structured in the same direction as them, but are, when viewed from the warp knit structures, inserted into their chain-stitch structure, and this is why they are called longitudinal insertion yarns. As carbon fiber yarns are thus embraced, bound and aligned by warp knit structures, a bamboo blind-style warp knit sheet is obtained.

The longitudinal insertion yarns and warp knit structures form pairs and longitudinal insertion yarns and as many warp knit structures are arranged in parallel in such a manner that their lengthwise direction coincide with the longitudinal direction of the warp knit sheet. Although the longitudinal insertion yarns and warp knit structures have continuity along the longitudinal direction of the warp knit sheet, they do not have continuity along the transverse direction (widthwise direction) of the warp knit sheet. To turn them into a warp knit sheet, therefore, it is necessary to give them continuity along transverse direction, which is perpendicular to longitudinal direction. This function is fulfilled by the transverse insertion yarns 5. The transverse insertion yarns join the multiple warp knit structures in transverse direction and enable them to form a sheet. Namely, the presence of the transverse insertion yarns 5 ensures that both adjacent ground knitting yarns 4 and the longitudinal insertion yarns 3, which are restrained by the ground knitting yarns 4, are united, thus allowing a bamboo blind-style warp knit sheet, featuring gaps 2 between longitudinal insertion yarns 3, to form. Such gaps 2 provide flow paths for a matrix resin during resin transfer molding and resin infusion molding, thereby facilitating its penetration.

In concrete terms, it is preferable that warp knit structures based on ground knitting yarns 4 as illustrated in Fig. 1 contain 3 to 10 courses/cm. As long as this range is adhered to, it is possible for the warp knit sheet to easily absorb the difference in arc length created by the inside and outside radii of curvature when the warp knit sheet is deformed along the shape of a curved plane. The knitting density of warp knit structures is expressed by the number of loops (courses) per unit length (cm), and the larger this value, the finer the warp knit structures are. Conversely, the smaller this value, the coarser the warp knit structures are. The warp knit structures are formed in such a manner that they embrace and bind longitudinal insertion yarns, so that the knitting density directly affects the alignedness and straightness of longitudinal insertion yarns. Since these characteristics have an impact on the mechanical properties of the warp knit sheet and composite based on it and the penetrability of the matrix resin, an optimum density design is required. The larger the knitting density - namely, the larger the number of the unit "courses/cm", the higher the alignedness and straightness of longitudinal insertion yarns and the better the handleability and the mechanical properties of the composite tend to be, although flexibility, conformability and matrix resin penetrability tends to be reduced. For example, from the viewpoint of handleability of the warp knit sheet, it is preferable to set the knitting density of chain-stitch structures large. However, if the knitting density of warp knit structures is too large, conformability to curved shapes is reduced. Also, when impregnating the warp knit sheet with a matrix resin, if the knitting density of warp knit structures is too large, the reinforcing effect is reduced as the matrix resin fails to sufficiently penetrate the carbon fiber yarns, leading to the formation of voids or unimpregnated regions, and the surface coverage rate of carbon fiber yarns by warp knit structures based on ground knitting yarns becomes too high, resulting in the hindrance of the bonding between the carbon fiber yarns the matrix resin. Namely, as the knitting density increases, composite characteristics improve, thanks to improved straightness, but if the knitting density is set too high, composite characteristics tend to decline. If, on the other hand, the knitting density is too low, that is, if the unit "courses/cm" is too small, crimping or bending is induced in carbon fiber yarns, thus causing a stress concentration in the composite. This prevents carbon fiber yarns from realizing their full potential, again leading to a reduced reinforcing effect. Furthermore, the larger the knitting density, the lower the productivity is. In light of a comprehensive examination of the trade-off relationship between various characteristics, it is, as mention above, preferable that the knitting density range of the chain-stitch structure is within 3 to 10 courses/cm, more preferably 5 to 9 courses/cm. In this regard, the warp knit structures are chain-stitch structures.

It is preferable that the ground knitting yarns 4 be composed of crimped yarns or covering yarns of synthetic fibers. Such composition can minimize the crimping and bending of carbon fiber yarns used as longitudinal insertion yarns 3, thus helping carbon fiber yarns move in longitudinal direction independent of adjacent ones. Such independent movement makes it possible to easily absorb the difference in arc length created by the inside and outside radii of curvature of a curved shape.

Carbon fibers that can be advantageously used as longitudinal insertion yarns 3 include polyacrylonitrile (PAN)-based carbon fibers, pitch-based carbon fibers, cellulose-based carbon fibers, and any combination of two or more types. When attaching particular importance to the strength and modulus of elasticity of a composite material, the use of PAN-based carbon fibers is preferable.

Since the advantageous effect of the invention is particularly pronounced when carbon fiber yarns having a large overall density are used, carbon fiber yarns need to have 12,000 to 50,000 filaments, preferably 24,000 to 50,000 filaments. It is also preferable that the overall density of a carbon fiber yam used under the invention be 400 to 4,000 tex, more preferably 650 to 4,000 tex. Such carbon fiber yarns having a large overall density do not only make the high-productivity manufacture of warp knit sheets possible but also are available at low prices.

A carbon fiber yam needs to have a tensile strength (strength) of 4 GPa or more and a tensile modulus of 220 GPa or more but not more than 450 GPa. In general, tensile strength and tensile modulus are advantageous for structural materials, but high tensile moduli in excess of 450 GPa are not preferable as they accompany inadequate strength against torsion or compressive deformation and high price. At present, carbon fiber yarns having tensile strengths greater than 6.55 GPa are not widely available, so that the preferable tensile strength is 6.5 GPa or less.

Here, the tensile strength and tensile modulus of carbon fiber yarns are measured in strand state using the following method: a carbon fiber bundle is impregnated with an epoxy resin comprising ERL 4221 (manufactured by Dow Chemical Japan, Ltd.), boron trifluoride monoethylamine (BF3-MEA) and acetone in 100, 3 and 4 parts, respectively; the obtained resin-impregnated strands are cured by heating at 130°C for 30 minutes and are then subjected to a measurement using a resin-impregnated strand testing method specified in JIS R 7608 (2007).

Carbon fiber yarns need to have a drape value of 4 to 22, preferably 6 to 20, as measured using a method described hereinafter. If this value exceeds 22, threads become too stiff, leading to a tendency for the curved plane conformability of a warp knit sheet to deteriorate, and this problem is difficult to overcome even if the number of courses in the chain-stitch structure is reduced. If, on the other hand, the value is less than 4, threads become deformed during lamination or resin impregnation, leading to reduced laminatability and composite characteristics. Attempts to overcome this by increasing the number of courses in the chain-stitch structure is not preferable as it give rise to new problems, such as deterioration in resin impregnability.

After deciding on the overall density of the carbon fiber yam, single fiber density and number of filaments, the drape value may be set within the 4 to 22 range by adjusting the type of the sizing agent used, amount deposited, drying method in the case of applying a sizing agent, thread width, and so on.

In concrete terms, a size suited to the matrix resin used is first selected, and a sizing agent is obtained as an aqueous dispersion or aqueous solution. Prior to immersing carbon fiber yarns in a size bath and drying them of water, their thread width is fixed and adjustments are made to obtain the desired drape value for the threads after drying. When drying carbon fiber yarns in a drying furnace of the circulating hot air oven type, the shape and tension of the threads are adjusted using a thread width regulation guide while they are introduced into the drier. When drying is done through contact with a hot drum, the desired drape value may be obtained by adjusting the drying temperature and duration after an adjustment of thread tension.

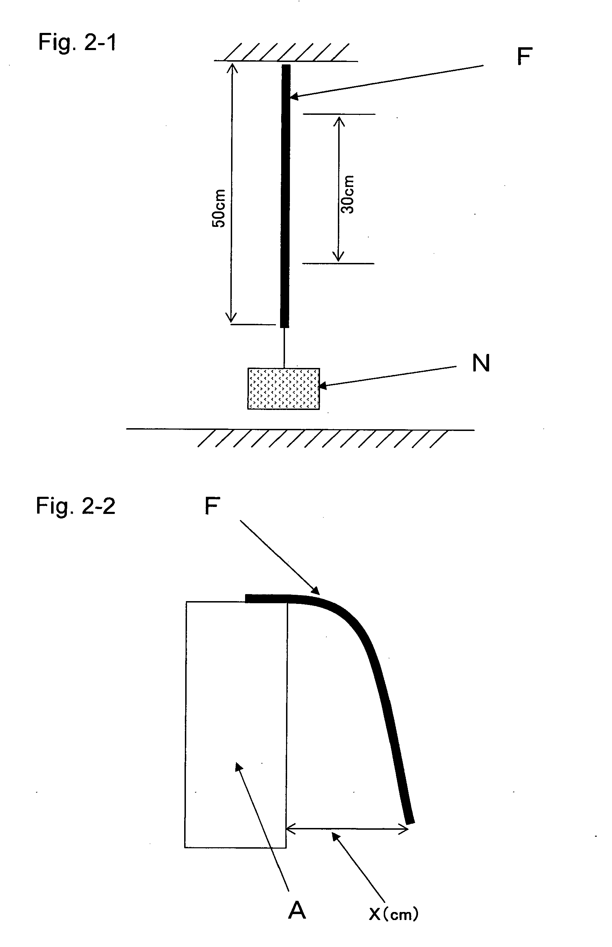

The drape value of carbon fiber yarns is measured in accordance with the method illustrated in Figs. 2-1 and 2-2, which is similar to JIS L 1096 (2010) "Fabric Testing Methods for Woven and Knit Fabrics", 8.21 Bending resistance, method B (sliding method).

Namely, as illustrated in Fig. 2-1, a carbon fiber yarn specimen F, which has been cut to a length of approx. 50 cm, is left to stand for 30 minutes or more under a tension of 0.0375 gf (0.000368 N)/tex and a set of atmospheric conditions comprising a temperature of 23°C and a moisture of 60%. The specimen is then cut to a length of approx. 30 cm. One end of the carbon fiber yarn F is held down on the upper base of a quadrangular prism A in such a manner that part of the carbon fiber yam F is lying flat on the base and the rest of the carbon fiber yam F, measuring approx. 25 cm in length, is sticking out into the air, parallel to the floor surface and perpendicularly to a side of the quadrangular prism A, with the other end of the carbon fiber yam F supported by a flat plate B (not shown in the drawing). Now, the flat plate B is suddenly removed, leaving the carbon fiber yarn F in a cantilever state. One second later, the shortest distance X (cm) that the far end of the carbon fiber yam F, which has sagged down due to gravity, makes with the quadrangular prism A is measured (Fig. 2-2). A total of ten yarns are subjected to a measurement, and the average of the ten distance X (cm) values measured is taken as the drape value.

It is preferable that 3 to 12 longitudinal insertion yarns be inserted per 25 mm. From another viewpoint, a unit area weight of longitudinal insertion yarns in the warp knit sheet is 190 to 800 g/m², preferably 250 to 500 g/m². As long as the unit area weight is in this range, a warp knit sheet having excellent handleability and resin impregnability during molding can be obtained.

It is preferable that the transverse insertion yarns 5 illustrated in Fig. 1 shuttle between adjacent chain-stitch structures at a frequency of once (there and back) per 2 to 30 courses, more preferably once per 3 to 10 course. From now on, the inverse of the frequency in which the transverse insertion yarns shuttle between adjacent chain-stitch structures is called the transverse insertion yam interval. Namely, if the frequency in which transverse insertion yarns shuttle between adjacent chain-stitch structures is once per 3 courses, the transverse insertion yarn interval is 3 courses/ time. As described above, transverse insertion yarns have the function of uniting both longitudinal insertion yarns and warp knit structures in the transverse direction of the warp knit sheet, thus playing an important role in maintaining the form of the warp knit sheet. The smaller the transverse insertion yam interval, the larger the amount of transverse insertion yarns to unite adjacent warp knit structures is, thus improving the form maintaining function of the warp knit sheet. In this case, the straightness and parallelism of adjacent longitudinal insertion yarns also improve, so that it is preferable from the viewpoint of a reinforcement effect as well. However, if the transverse insertion yam interval falls below 2 courses/ time, transverse insertion yarns end up restraining adjacent carbon fiber yarns in their independent longitudinal movement. If, on the other hand, the transverse insertion yam interval exceeds 30 courses/ time, the amount of transverse insertion yarns placed per unit length is small where a long warp knit sheet is used by cutting it into smaller pieces, this leads to inferior form stability and handleability and an inability to maintain parallelism between adjacent longitudinal insertion yarns, possibly as well as an inability to secure the desired reinforcement effect in the intended reinforcement direction. In short, as long as the transverse insertion yam interval of transverse insertion yarns 5 is within the above-mentioned range, carbon fiber yarns can move in longitudinal direction independent of the adjacent ones, thus making it possible to easily absorb the difference in arc length created by the inside and outside radii of curvature of a curved shape.

For transverse insertion yarns 5, filaments of synthetic fibers, such as glass fiber, polyester fiber, polyamide fiber and aramid fiber, may be used, with the use of crimped yarns of synthetic fibers, covering polyurethane fibers, and the like preferred. Examples of crimped yam include a bulky yam based on a thread of synthetic fibers, made by heat-treating and untwisting it. Because of its bulkiness, crimped yarn exhibits excellent elasticity when stretched in fiber lengthwise direction. It is preferable that a crimped yarn of synthetic fibers has its crimp ratio (CR), an indicator of the bulkiness as a proxy of elasticity, within the 10 to 60% range. Using a crimped yam as transverse insertion yarns makes it possible to enhance the elasticity of the warp knit sheet in transverse direction and improve the flexibility of the warp knit sheet and its conformability. The crimp ratio (CR) is a value measured in accordance with JIS L 1013 (2010).

Synthetic fibers that may be advantageously used in a crimped yam include polyester fiber, polyamide fiber, aramid fiber, polyarylate fiber, polyvinyl alcohol fiber, polyethylene fiber, polypropylene fiber and PBO fiber. The use of such synthetic fibers is expected to be effective in minimizing the occurrence of fluff and yam breakage by improving the yam processability of the warp knit sheet manufacturing process. Of these, polyester fiber is particularly preferable for its affordability and excellent size stability. To minimize the occurrence of yam breakage and other incidents that cause machine stoppage, it is preferable that the density of crimped yarns during the knitting process be within the 1.5 to 150 tex, more preferably the 3.0 to 100 tex range, and most preferably within the 5.0 to 50 tex range.

For use in ground knitting yarns 4, glass fiber, polyester fiber, polyamide fiber, aramid fiber, polyarylate fiber, polyvinyl alcohol fiber, polyethylene fiber, polypropylene fiber, PBO fiber, and the like are preferable as with the case of transverse insertion yarns 5. Of these, polyester fiber is particularly preferable for its affordability and excellent size stability. No particular restrictions apply to the form of yam, so that both filament yarn and spun yam can be used. From the viewpoint of obtaining surface smoothness in the base material, multifilament yam is preferable. As with the case of transverse insertion yarns, crimped yarns, covering polyurethane fiber, etc. are preferable. For example, crimped yarns are capable of softly aligning longitudinal insertion yarns because of their high elasticity compared to non-crimped yarns. For this reason, they are advantageous in terms of the excellent impregnability of carbon fiber yarns, as longitudinal insertion yarns, with a matrix resin. To minimize the occurrence of yam breakage and other incidents that cause machine stoppage, it is preferable to choose from synthetic fiber yarns having a density of approx. 1.5 to 150 tex, more preferably 3.0 to 100 tex, and most preferably 5.0 to 50 tex, as necessary.

Although warp knit sheets can take various forms in terms of usage length and usage width according to the structure of a curved stringer or spar, it is, in general, preferable to produce them as rolls having a width of 150 to 1300 mm, more preferably 300 to 600 mm. As long as a warp knit sheet is in roll form and within the above width range, it is possible to minimize the time and effort involved in cutting it in widthwise direction and reduce the time and effort involved in cutting it in lengthwise direction during lamination as described later, as well as facilitating the automation of the sheet lamination process.

In a warp knit sheet of the invention, adjacent carbon fiber yarns as longitudinal insertion yarns are joined together by ground knitting yarns, while ground knitting yarns are united by transverse insertion yarns. As ground knitting yarns are united, adjacent longitudinal insertion yarns are also united. This configuration enables adjacent carbon fiber yarns in the sheet to move independent of each other. It is preferable that the maximum movable distance of carbon fiber yarns be 0.5 to 10 mm.

Here, the maximum movable distance of carbon fiber yarns is measured in accordance with the following method:
(1) A warp knit sheet is cut to a 25 cm-by-25 cm square. At the same time, the two of the sides of the square are set parallel to fiber direction.
(2) The cut-out square warp knit sheet is left to stand on a flat plate without applying tension to the threads.
(3) A longitudinal insertion yam located roughly halfway across the warp knit sheet in widthwise direction (direction perpendicular to fiber direction) is selected, and, with the two ends of the yam secured with hands, an adjacent longitudinal insertion yam is moved away from the longitudinal insertion yam secured on the flat plate, with the maximum distance between the threads measured. A total of five measurements are taken for every warp knit sheet, and their average is taken as the maximum movable distance.

In this measurement, the maximum distance to which longitudinal insertion yarns can be moved away from each other without causing a permanent deformation to transverse insertion yarns is measured.

If the maximum movable distance is less than 0.5 mm, conformability to a curved plane is insufficient, while resin impregnability during molding is reduced. If the maximum movable distance exceeds 10 mm, problems arise because deformability becomes too large, making it difficult to maintain the form, while unevenness in texture is apt to occur, making the mechanical characteristics of the composite prone to decline. The maximum movable distance is preferably 1 mm to 5 mm.

When a warp knit sheet of a preferable mode is placed over a hemisphere having a radius of 0.1 m, longitudinal insertion yarns become arranged along the shape of the curved surface of the hemisphere. Here, "become arranged along the shape of the curved surface", in concrete terms, means that, when a 35 cm-square cut-out sheet with two of its sides coinciding with fiber direction is placed over the surface of a mandrel shaped into a hemisphere with a radius of 0.1 m secured onto a flat base as illustrated in Fig. 3, the sheet can be made to tightly cover it without creating creases. Here, "without creating creases" means that the longitudinal insertion yarns that form part of the warp knit sheet conform to the surface (mandrel) it is meant to cover and that there is no bumps due to sagging or shrinking or bending of longitudinal insertion yam, as caused by an attempt to force the sheet to cling to the mandrel. In short, it means a state in which the warp knit sheet can be made to cling to the mandrel without causing any of the longitudinal insertion yarns by following the steps listed below:
(i) A longitudinal insertion yam located roughly halfway across the 35 cm-square warp knit sheet in widthwise direction is placed tightly over the surface of the hemisphere in the 0° direction.
(ii) While the sheet is in this state, it is placed over the surface of the hemisphere in the 90° direction with respect to the longitudinal insertion yam located roughly halfway across it in widthwise direction.
(iii) Then, other parts of the sheet are placed tightly over the surface of the mandrel by adjusting the interval of longitudinal insertion yarns so as not to move the yarns lying along the 0° direction or fold the longitudinal insertion yarns lying across the 90° direction.

The warp knit sheet of the invention described above may be used, for example, after being laminated as described hereinafter. It is therefore preferable to partially bond longitudinal insertion yarns, chain-stitch structures and transverse insertion yarns to increase handleability by assisting in the maintenance of the form of knit structures and unification of sheets. It is also preferable to partially bond together laminated warp knit sheets. For this reason, it is preferable to provide interlayer bonding by selectively placing binders, at least on the surfaces of warp knit sheets, and fusion-bonding them onto the warp knit sheets or fusion-bonding binders to warp knit sheets after laminating them.

Ways of placing such binders include, for example, a dot pattern, line pattern and broken line pattern. To attach binders to a warp knit sheet in a dot pattern, particle-shaped binders are sprayed onto the surface of the warp knit sheet, followed by thermal-fusion bonding. To place binders in a line or broken line pattern, a fabric composed of binder ingredients, such as a nonwoven fabric or woven fabric, is produced first and then glued onto the surface of a warp knit sheet, followed by thermal-fusion bonding, or binders are incorporated into the warp knit sheet during its manufacture as filling threads.

As such a binder, a thermo-setting resin, thermoplastic resin or a mixture of the two may be used. While it is acceptable to use a thermo-setting resin or thermoplastic resin alone, it is preferable to use a mixture of a thermoplastic resin and thermo-setting resin with excellent toughness in situations where impact resistance is required of a curved spar or stringer. Such a mixture exhibits optimum toughness, as well as optimum adherence to the warp knit sheet.

Examples of a thermo-setting resin include an epoxy resin, unsaturated polyester resin, vinylester resin, and phenol resin. Examples of a thermoplastic resin include polycarbonate, polyacetal, polyphenylene oxide, polyphenylene sulfide, polyarylate , polyester, polyimide, polyetherimide, polysulfone, polyether sulfone, polyether ether ketone, polyethylene, polypropylene, and polyvinyl formal. Preferable compositions are those that contain at least one type of resin chosen from an epoxy resin, polyamide, polyamide-imide, polyetherimide, and polyether sulfone.

When applying filling threads, they may be strung alongside carbon fiber yarns or wound around carbon fiber yarns in spiral form like S or Z-direction single-covered yarns or S and Z-direction double-covered yearns prior to knitting a warp knit sheet.

It is preferable that filling threads melt at temperatures where ground knitting yarns or transverse insertion yarns do not melt. For example, when polyester fiber thread is used for ground knitting yarns and transverse insertion yarns, it is preferable to use a fiber whose melting point is lower than the melting point of polyester fiber, which is 255°C. In concrete terms, a low-melting point copolymerized polyester fiber, copolymerized polyamide fiber, polyolefin fiber and other fibers whose melting points range between 80 and 200°C.

It is also preferable that a warp knit sheet to which such binders have been introduced be molded into a laminate either after being cut into a desired shape and while undergoing at least partial thermal-fusion bonding with identical sheets or while undergoing simultaneous cutting based on automatic equipment and thermal-fusion bonding.

In another mode of embodiment of the invention, it is also preferable to partially stitch such warp knit sheets together using a stitching thread, etc. to maintain their laminate form. Materials suitable for use as such a stitching thread include glass fiber, carbon fiber, polyamide, polyester and other synthetic fiber.

Structural warp knit sheets as described above are processed into a laminate for spars and stringers by laminating a prescribed number of them and transfiguring them into a desired shape as a laminate, such as a curved shape. In this regard, there is no need for laminating and shaping the number of warp knit sheets corresponding to the required thickness at once. Namely, it is also acceptable to use two or more stacks of multiple warp knit sheets, shape those stacks separately, and stack them together to produce a thick laminate for spars and stringers.

A preferred mode of embodiment for a warp knit sheet laminate composed of warp knit sheets of the invention (hereinafter also just referred to as a "laminate") is described below using drawings.

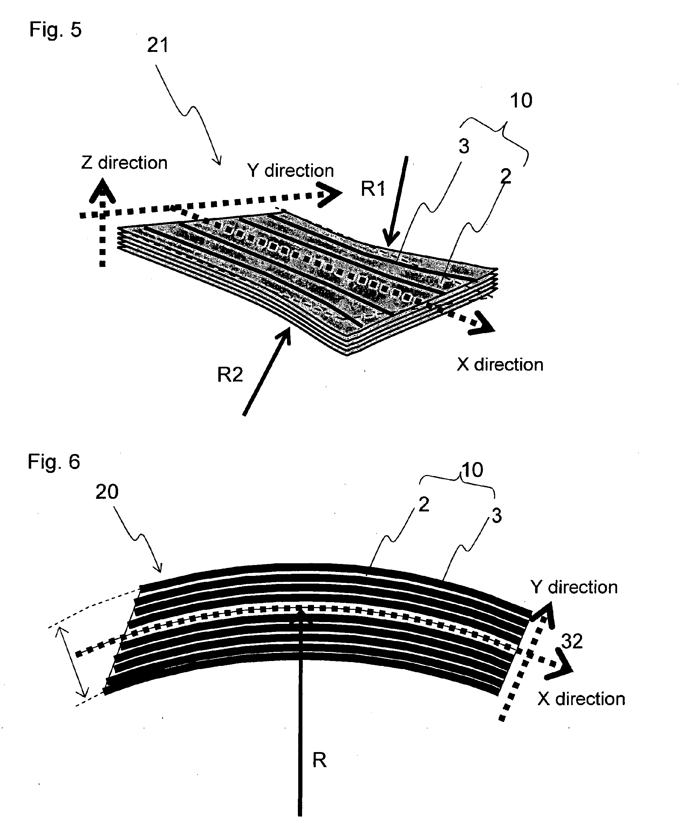

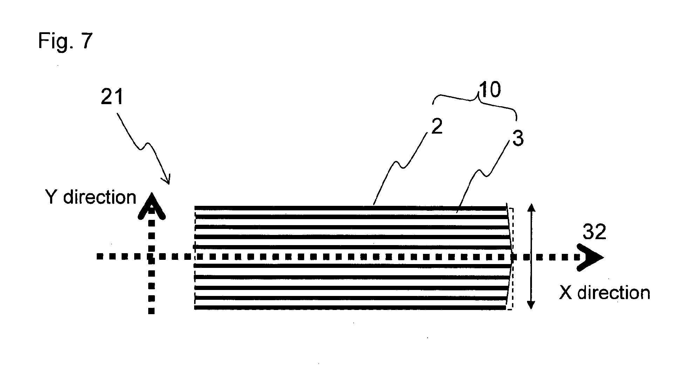

Fig. 4 is a schematic perspective view of an embodiment of the laminate for a spar having curves. Fig. 5 is a schematic perspective view of another embodiment of the laminate for a spar having a twist. Fig. 6 is a schematic plan view (X-Y direction) of the laminate for a spar having curves illustrated in Fig. 4. Fig. 7 is a schematic plan view (X-Y direction) of the laminate for a spar having a twist illustrated in Fig. 5.

The laminate for spars having curves 20 illustrated in Figs. 4 and 6 and the laminate 21 for spars having a twist illustrated in Figs. 5 and 7 have been produced by laminating and shaping a number of warp knit sheets 10 and therefore constitute embodiments of the invention. The laminates 20 and 21 have been produced in such a way that adjacent carbon fiber yarns can move in their fiber direction independent of each other. As a result, if the warp knit sheets are subjected to a load that would cause them to bend into an arch in a plane or twist, as illustrate in Figs. 4 and 5, such warp knit sheets do not develop creases as adjacent carbon fiber yarns move independently and accommodate the change in shape by changing their relative locations as illustrated is Figs. 6 and 7.

To form curved stringers and spars designed to support large loads imposed on aircraft wings and windmill blades, particularly spar caps, it is preferable that such laminates 20 and 21 have large thicknesses. For this reason, it is preferable that large numbers of warp knit sheets be laminated, within the 50 to 300 range in the case of the thickest part. Here, when forming stringers and spars, there is a need to change the number of warp knit sheets laminated from part to part. For example, at the base of a blade and other locations where loads tend to be concentrated, extra sheets that do not cover the whole length may be laminated on a local basis. The number of sheets laminated for the thickest part mentioned above means the number of sheets laminated for the thickest part, including the number of sheets only laminated locally.

It is preferable that the minimum radius of curvature R of an in-plane curvature (e.g. the arch created in the x-y plane in Fig. 4) and the minimum radii of curvature R1 and R2 for a curvature in a three-dimensional space as exhibited by the laminates 20 and 21 (hereinafter the expression the "minimum radius of curvature" to be used to denote R, R1 and R2 collectively) be within the 0.1 to 10 m range as it will maximize the advantageous effect of the invention. Namely, if the laminates produced from warp knit sheets of the invention are used to manufacture a curved structure having such a minimum radius of curvature, adjacent carbon fiber yarns in the warp knit sheets move in their fiber direction independent of each other. This makes it possible to arrange carbon fiber yarns along the shape of the curve without creating creases in the warp knit sheet. It is also preferable that the lengthwise direction of the laminates 20 and 21 and the fiber-axis direction of the longitudinal insertion yarns substantially coincide.
When configuring a laminate from warp knit sheets that incorporate binders at least on their surfaces as described above, it is preferable that the warp knit sheets be laminated first and then partially bonded together by fusing the binders that are present between them. Such binders are capable of limiting the disintegration or loosening of the warp knit structure and the structure of transverse insertion yarns when warp knit sheets are laminated or impregnated with a matrix resin. At the same time, by partially bonding the laminated warp knit sheets together, the handleability and form stability of the laminate can be enhanced. In this regard, making the bonding of warp knit sheets partial by keeping the binders from covering the entire surfaces of the warp knit sheets ensures that hindrance to matrix resin penetration in thickness direction during composite molding can be limited. This effect is particularly pronounced with resin transfer molding or resin infusion molding.

Curved laminates based on warp knit sheets of the invention are advantageously used for spars, stringers, and the like. In the case of spars and stringers subject to a strict requirement for stiffness, they are advantageously used for cap sections. When used for spar caps, they exhibit particularly significant effectiveness. Curved laminates whose minimum radius of curvature falls within the 0.1 to 10 m range are advantageously used for spars that form part of main wings and tail units of aircraft, helicopter blades, and windmill blades. Amid demands for improved aerodynamic characteristics (including improved fuel efficiency, rotational efficiency, quietness, and the like) in addition to upsizing and weight reduction, wing structures (wings and blades) are subject to a strict requirement for conformability to curved shapes, and laminates of the invention can be advantageously used for such applications.

When applying such a warp knit sheet laminate to a spar cap, it is preferable to use a laminate configuration that includes warp knit sheets featuring longitudinal insertion yarns whose fiber axis substantially coincides with the lengthwise direction of the spar, namely carbon fiber yarns arranged in 0° direction, by at least 50 weight % or more, more preferably 80 weight % or more. Warp knit sheets featuring carbon fiber yarns arranged at other angles, those incorporating multiaxial glass fiber base material, and the like may also be used as necessary. Here, "longitudinal insertion yarns whose fiber axis substantially coincides with the lengthwise direction of the spar" means that the difference between the lengthwise direction of the spar and the fiber orientation of the carbon fiber yarns that form part of warp knit sheets is within ± 5°.

When manufacturing spars or stringers using a laminate composed of warp knit sheets, spars or stringers may be molded by just subjecting a laminate to resin injection, impregnation and curing, or, alternatively, or the laminate may be combined and integrated with a skin or other material prior to resin injection, followed by molding through resin injection, impregnation and curing. As the molding method, resin infusion molding or resin transfer molding is preferable to the hand lay-up method for being conducive to high manufacturing efficiency and composite product quality and having excellent suitability for mass production. In this regard, if a thermosetting resin is used as the matrix resin, the mechanical properties of the obtained composite can be enhanced. Concrete examples include an epoxy resin, unsaturated polyester resin and vinyl ester resin, of which an epoxy resin is most preferable.

### Examples

By using carbon fiber yarns (T700SC-24000 manufactured by Toray Industries, Inc.: 24000 filaments, fiber density 1650 tex, tensile strength 4.9 GPa, and tensile modulus 230 GPa) as longitudinal insertion yarns and adjusting the amount of size deposited on carbon fiber yarns, yam width and conditions for yam drying after sizing, the kinds of drapability shown in Table 1 were obtained.

In Examples 1 to 8 and Comparative Examples 1 and 2, warp knit structures were knitted from polyester crimped yarns (30 tex and CR value 43%) as ground knitting yarns, and longitudinal insertion yarns (carbon fiber yarns as specified above) were inserted into the warp knit structures at a rate of 5 per every 25 mm (equivalent to a carbon fiber unit area weight of 330 g/m²), with the transverse insertion yarns (same polyester crimped yarns as the ground knitting yarns) inserted into the warp knit structures in a manner to unite them into a warp knit sheet by shuttling between them.

As comparative materials, plain woven fabrics having a unit area weight of 330 g/m² produced from the T700SC-24000 carbon fiber (drape value 19) (Comparative Example 3) and prepregs produced from such fabrics by impregnating them with an epoxy resin having a curing temperature of 180°C by 38 mass % (Comparative Example 4).

Both warp knit sheets and plain woven fabrics were thermally deposited with fine-particle binders having a glass temperature of 70°C on both sides to improve their laminatability.

In all examples and comparative examples, either of the above base materials were cut into the required size as appropriate, and five laminates of such base material, each containing 10 plies, were prepared. They were then trained to the shape of a circular cylinder having a radius of curvature of 0.1 m and stack together to produce a laminate containing a total of 50 plies. In producing such a laminate, heat was applied as necessary. Next, dry preforms (Examples 1 to 8 and Comparative Examples 1 to 3) were molded by VaRTM (vacuum-assisted resin transfer molding) using a two-component liquid epoxy resin having a curing temperature of 180°C, while prepregs (Comparative Example 4) were vacuum-molded. The above epoxy resin provided a high-toughness hardened material having a bending elastic modulus of 3.0 GPa as measured by three point bending flexural test (using a 2 mm-thick, 10 mm-wide and 60 mm-long specimen and 32 mm support span) under JIS K 7171 (2008) and a tensile elongation of 5% as measured in accordance with JIS K 7113 (1995) (using a 2 mm-thick specimen at a tensile speed of 1 mm/min).

Table 1 shows knitting, laminating and molding results for those examples. Here, laminatability was assessed in terms of the handleability of the base material and fluffing conditions during lamination, while curved plane conformability was evaluated in terms of the occurrence or otherwise of creasing, generation or otherwise of inter-yam gaps and external appearance of the molded product. In both cases, results were graded in four levels of A, B, C and D from the best to worst.

As can be seen from Table 1, warp knit sheets exhibit improved curved plane conformability compared to plain weaving-based dry fabrics and prepregs. This is particularly so with those having specific drape values that fall within the range disclosed under the invention as they display excellent curved plane conformability, as well as excellent handleability during knitting and lamination (called "laminatability" in the table).

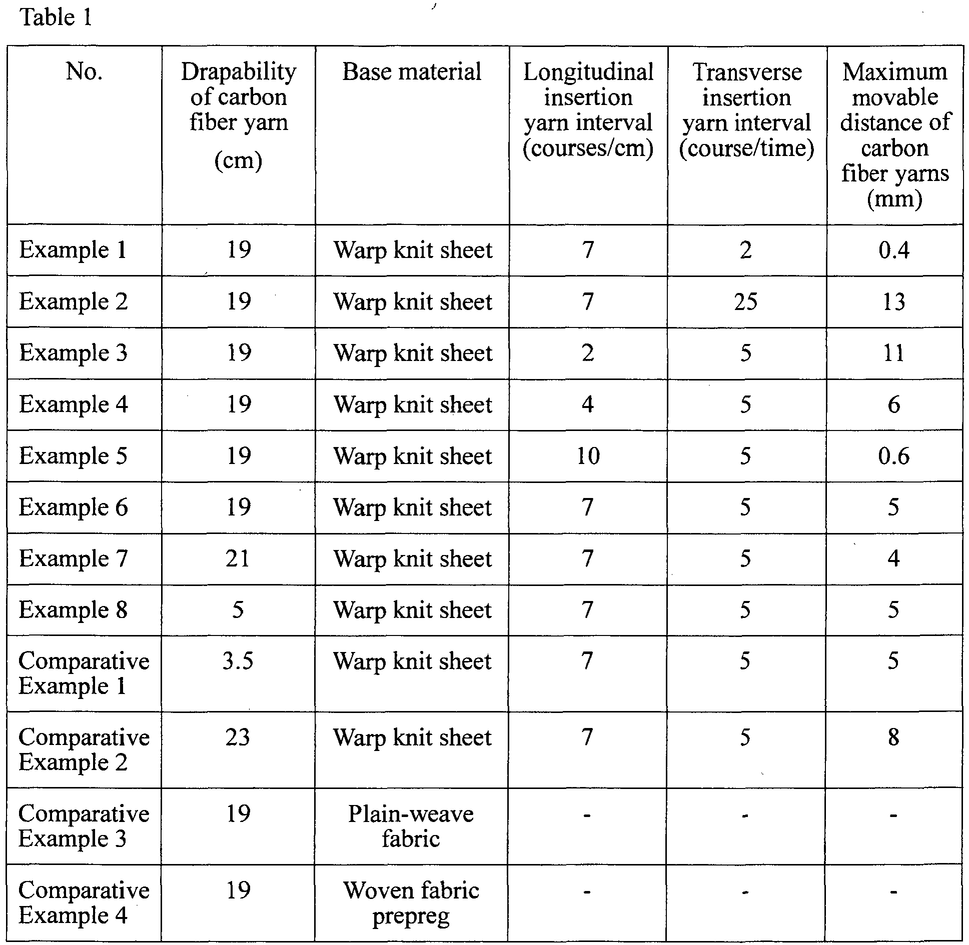

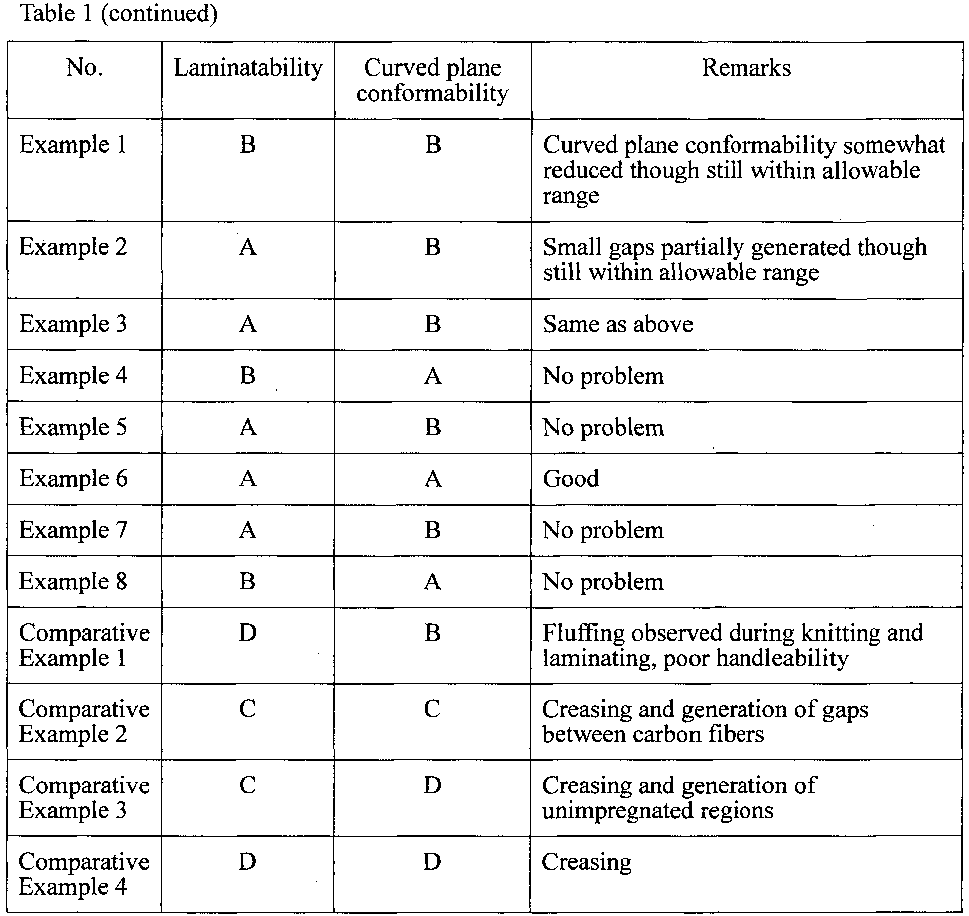

### Industrial Applicability

The warp knit sheet of the invention allows adjacent carbon fiber yarns inserted into it move in their fiber direction independent of each other. As a result, such a sheet easily conforms to a curved shape even when multiple sheets are used to produce a curved laminate. Also, the ability of the warp knit sheet to arrange carbon fiber yarns evenly in conformity with the curvature of a curved spar without developing creases makes it possible to obtain composites having excellent mechanical properties.

Moreover, when warp knit sheets making up such a laminate feature binders on their surfaces or are stitched together, molding methods conducive to high manufacturing efficiency and composite product quality can be accommodated as this makes it possible to partially fix laminated warp knit sheets to each other to the extent of retaining the above movability of carbon fiber yarns.

For these reasons, they are particularly advantageous as structural materials for main wings and tail units of aircraft, helicopter blades and windmill blades whose curved sections have a minimum radius of curvature of 0.1 to 10 m.

### Reference Signs List

10: Warp knit sheet
2: Gap
3: Longitudinal insertion yarns (carbon fiber yarns)
4: Ground knitting yarns
5: Transverse insertion yarns
20: Laminate for arched spar
21: Laminate for twisted spar
R: Minimum radius of curvature of in-plane curvature
R1, R2: Minimum radius of curvature of out-of plane curvature
F: Carbon fiber yam
N: Load
A: Quadrangular prism (for supporting fiber)

## Claims

1. A structural warp knit sheet to serve as a warp knit sheet for spars and stringers, comprising a warp knit structure constituted of chain-stitch structures of ground knitting yarns, continuous carbon fiber yarns inserted into the warp knit structure in the longitudinal direction as longitudinal insertion yarns, and transverse insertion yarns inserted in directions along which they shuttle between the adjacent chain-stitch structures to unite the chain-stitch structures, the longitudinal insertion yarns being carbon fiber yarns each including 12,000-50,000 filaments and having a tensile strength of 4 GPa or higher, a tensile modulus of 220-450 GPa, and a drape value of 4-22, and the longitudinal insertion yarns each being able to move independently of the adjacent yarns and able to be arranged along the shape of a curved plane.

2. The structural warp knit sheet according to claim 1, wherein the carbon fiber yarns have a maximum movable distance of 0.5 to 10 mm and wherein, when the structural warp knit sheet is placed over a hemisphere having a radius of 0.1m, the carbon fiber yarns can be arranged along the shape of the curved plane of the hemisphere.

3. The structural warp knit sheet according to claim 1 or 2, wherein at least either of the ground knitting yarns and the transverse insertion yarns are crimped yarns or covering yarns.

4. A warp knit sheet laminate comprising structural warp knit sheets as set forth in any of claims 1 to 3, their number being 50 to 300 in the thickest part, the structural warp knit sheets being partially bonded or stitched together, the carbon fiber yarns being arranged along the shape of a curved plane having a minimum radius of curvature of 0.1 to 10 m in its curved part, and at least 50 weight % of the structural warp knit sheets in the warp knit sheet laminate are arranged so that the lengthwise direction of the warp knit sheet laminate and the fiber-axis direction of the longitudinal insertion yarns substantially coincide.

5. The warp knit sheet laminate according to claim 4, wherein the laminated structural warp knit sheets have a binder at least on their surfaces and the partial bonding between laminated structural warp knit sheets is achieved by the binder.
